(19) Europäisches Patentamt
European Patent Office
Office européen des brevets

(11) EP 1 559 543 A2

(12) # DEMANDE DE BREVET EUROPEEN

(43) Date de publication:
**03.08.2005 Bulletin 2005/31**

(51) Int Cl.[7]: **B32B 27/34**, B32B 27/08

(21) Numéro de dépôt: **05290119.6**

(22) Date de dépôt: **20.01.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **26.01.2004 FR 0400712**

(71) Demandeur: **Arkema**
**92800 Puteaux (FR)**

(72) Inventeurs:
- **Lacroix, Christophe**
**78124 Mareil Sur Mauldre (FR)**
- **Montanari, Thibaut**
**27300 Bernay (FR)**

(74) Mandataire: **Neel, Henry**
**ARKEMA**
**Département Propriété Industrielle**
**4-8, cours Michelet,**
**La Défense 10**
**92091 Paris La Défense Cedex (FR)**

(54) **Structures multicouches polyamide 1/couche intermédiaire/polyamide 2 pour articles décorés**

(57) La présente invention concerne une structure multicouches transparente polyamide 1/ couche intermédiaire / polyamide 2. Cette structure peut être fabriquée par coextrusion.

L'invention concerne aussi un article décoré constitué d'un objet sur lequel on a collé la structure précédente, la couche de polyamide 1 étant à l'extérieur. Le collage peut être effectué par pressage à chaud ou à l'aide d'un adhésif. Le décor peut être déjà existant sur l'objet avant le collage de la structure, on peut aussi décorer la couche de polyamide par sublimation d'encres ou combiner ces deux modes de décor. L'objet est par exemple un ski.

Selon une autre forme les structures polyamide 1/ couche intermédiaire / polyamide 2 peuvent être collées sur une mousse pouvant être en polyuréthane ou sur une résine pouvant être en polyuréthane. On peut aussi surmouler la mousse ou la résine sur la structure polyamide 1/ couche intermédiaire / polyamide 2 disposée dans un moule, la couche de polyamide 1 étant du coté de la paroi du moule.

La structure obtenue est utile par exemple pour faire des skis ou des chaussures de sport. L'invention concerne aussi ces objets. Avantageusement la couche de polyamide 1 est semi cristalline.

Chacune des couches peut être constituée de plusieurs couches.

EP 1 559 543 A2

## Description

### *Domaine de l'invention*

La présente invention concerne des structures multicouches polyamide 1/ couche intermédiaire / polyamide 2 pour articles décorés. Elles se présentent sous forme de film ou de feuille (ou plaque). On utilise habituellement le terme film jusqu'à une épaisseur de 0,5 mm environ et le terme plaque ou feuille au delà. Ces structures peuvent être collées par exemple par pressage à chaud sur un article tel qu'un ski, la couche de polyamide 1 étant à l'extérieur. Dans ce cas la couche de polyamide 1 forme le dessus du ski. Avant le collage de la structure polyamide 1/ couche intermédiaire / polyamide 2 le ski peut être préalablement décoré sur le dessus (c'est à dire sur la partie opposée à la semelle qui glisse sur la neige) ainsi après le collage de la structure polyamide 1/ couche intermédiaire / polyamide 2 (qui est transparente) on voit le décor. On peut aussi après le collage de la structure polyamide 1/ couche intermédiaire /polyamide 2 sur le ski décorer le ski par sublimation d'encres dans la couche de polyamide 1. On peut aussi combiner ces deux modes de décoration.

Selon une autre forme les structures polyamide 1/ couche intermédiaire / polyamide 2 peuvent être collées sur une mousse pouvant être en polyuréthane, la structure obtenue est utile par exemple pour faire des chaussures de sport.

Selon une autre forme les structures polyamide 1/ couche intermédiaire / polyamide 2 peuvent être collées sur un substrat autre qu'un ski (par exemple du polyuréthane rigide) la structure obtenue est utile par exemple pour faire divers objets.

### *L'art antérieur et le problème technique*

Les brevets **US 5616418** et **US 5506310** décrivent une structure constituée successivement d'une couche de polyamide, d'une couche d'un mélange de polyamide élastomère et de polyoléfine greffée et d'une couche qui peut être en bois, en métal, en époxy ou en polyuréthane. Cette structure peut être un ski c'est à dire que la couche en époxy ou en polyuréthane n'est pas une couche thermoplastique mais est l'âme du ski. Cette partie du ski n'est pas thermoplastique, la résine époxy est réticulée, de même si elle est en polyuréthane, c'est un polyuréthane rigide.

Le but de l'invention est de disposer d'une feuille (par exemple un dessus de ski) présentant les avantages suivants :

1) la surface supérieure est peu rayable ce qui implique une rigidité suffisante, de plus cette feuille doit être endurante mécaniquement (choc), endurante chimiquement et endurante aux UV
2) la feuille est suffisamment souple et déformable pour être conformée (typiquement à chaud, mais pas nécessairement) à la forme du ski, et également pour pouvoir être bien plaquée à plat pour être décoré de façon précise.
3) la surface inférieure est décorable à chaud par sublimation ce qui implique un polymère semi-cristallin et de point de fusion suffisamment haut (la sublimation se fait à T° inférieure à T°de fusion car le matériau ne doit pas fondre mais supérieure à Tg car le polymère doit avoir une mobilité suffisante pour la bonne migration des encres)
4) La feuille est suffisamment transparente pour être décorée sur la face inférieure (ce qui protège le décor des agressions extérieures).
5) Un autre paramètre est l'aptitude à la décoration par la méthode de sérigraphie, ce qui demande une face inférieure présentant une bonne adhésion avec les encres de sérigraphie.
6) Un autre paramètre est l'aptitude de la couche inférieure à être aisément assemblée sur tout type de substrat, dans le but de décorer ce substrat.

### *Brève description de l'invention*

La présente invention concerne une structure multicouches transparente polyamide 1/ couche intermédiaire / polyamide 2. Cette structure peut être fabriquée par coextrusion.

L'invention concerne aussi un article décoré constitué d'un objet sur lequel on a collé la structure précédente, la couche de polyamide 1 étant à l'extérieur. Le collage peut être effectué par pressage à chaud ou à l'aide d'un adhésif. Le décor peut être déjà existant sur l'objet avant le collage de la structure, on peut aussi décorer la couche de polyamide par sublimation d'encres ou combiner ces deux modes de décor. L'objet est par exemple un ski.

Selon une autre forme les structures polyamide 1/ couche intermédiaire / polyamide 2 peuvent être collées sur une mousse pouvant être en polyuréthane ou sur une résine pouvant être en polyuréthane. On peut aussi surmouler la mousse ou la résine sur la structure polyamide 1/ couche intermédiaire / polyamide 2 disposée dans un moule, la couche de polyamide 1 étant du coté de la paroi du moule.

La structure obtenue est utile par exemple pour faire des skis ou des chaussures de sport. L'invention concerne aussi ces objets. Avantageusement la couche de polyamide 1 est semi cristalline.

Chacune des couches peut être constituée de plusieurs couches.

La structure de l'invention présente de nombreux avantages. La couche de polyamide 1 apporte :

- la tenue à l'abrasion,
- la tenue au choc et notamment à froid,
- la décoration possible par sublimation d'encres grâce à sa température de fusion (ou de transition vitreuse) élevée alors que le TPU et les mélanges de TPU et d'ABS ne peuvent pas être décorés par sublimation d'encres,
- la transparence totale avec les PA semi-aromatiques ou semi-cycloaliphatiques et leurs mélanges éventuels avec des polyamides aliphatiques de type PA 11 ou PA 12,
- la tenue UV et chimique,
- l'aspect brillant,
- le toucher lisse.

***Description détaillée de l'invention***

**S'agissant de la couche de polyamide 1** elle comprend au moins un polyamide choisi parmi les PA semi-aromatiques ou semi-cycioaliphatiques et les polyamides aliphatiques.

Les polyamides aliphatiques peuvent être choisis parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12.

A titre d'exemple de polyamides aliphatiques résultant de la condensation d'une diamine aliphatique ayant de 6 à 12 atomes de carbone et d'un diacide aliphatique ayant de 9 à 12 atomes de carbone on peut citer :

le PA 6-12 résultant de la condensation de l'hexaméthylène diamine et de l'acide 1,12-dodecanedioïque,
le PA 9-12 résultant de la condensation de la diamine en C9 et de l'acide 1,12-dodecanedioïque,
le PA 10-10 résultant de la condensation de la diamine en C10 et de l'acide 1,10-decanedioïque,
le PA 10-12 résultant de la condensation de la diamine en C9 et de l'acide 1,12-dodecanedioïque.

Quant aux copolyamides 11/12 ayant soit plus de 90% de motifs 11 soit plus de 90% de motifs 12, ils résultent de la condensation de l'acide amino 1-undecanoïque avec le lauryllactame (ou l'alpha omega amino acide en C12).

La couche de polyamide peut comprendre aussi des copolymères à blocs polyamides et blocs polyéthers, mais il est avantageux que ce soit en proportion n'altérant pas la transparence de cette couche.

**Les copolymères à blocs polyamides et blocs polyéthers** résultent de la copolycondensation de séquences polyamides à extrémités réactives avec des séquences polyéthers à extrémités réactives, telles que, entre autres

1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatiques appelées polyétherdiols.
3) Séquences polyamides à bouts de chaînes dicarboxyliques avec des polyétherdiols, les produits obtenus étant, dans ce cas particulier, des polyétheresteramides. Les copolymères de l'invention sont avantageusement de ce type.

Les séquences polyamides à bouts de chaînes dicarboxyliques proviennent par exemple de la condensation de précurseurs de polyamides en présence d'un diacide carboxylique limiteur de chaîne.

Les séquences polyamides à bouts de chaînes diamines proviennent par exemple de la condensation de précurseurs de polyamides en présence d'une diamine limiteur de chaîne.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, des précurseurs de polyamide et un diacide limiteur de chaîne. On obtient un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère.

On peut aussi faire réagir du polyétherdiamine, des précurseurs de polyamide et un diacide limiteur de chaîne.

On obtient un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère.

La quantité de blocs polyéther dans ces copolymères à blocs polyamides et blocs polyéthers est avantageusement de 10 à 70% en poids du copolymère et de préférence de 35 à 60%.

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne diacide pour faire les polymères à blocs polyamides et blocs polyéthers ayant des motifs répartis de façon statistique.

La masse molaire en nombre $\overline{Mn}$ des séquences polyamides est comprise entre 500 et 10000 et de préférence entre 500 et 4000 sauf pour les blocs polyamides du deuxième type. La masse $\overline{Mn}$ des séquences polyéther est comprise entre 100 et 6 000 et de préférence entre 200 et 3 000.

Ces polymères à blocs polyamides et blocs polyéthers qu'ils proviennent de la copolycondensation de séquences polyamides et polyéthers préparées auparavant ou d'une réaction en une étape présentent, par exemple, une viscosité intrinsèque entre 0,8 et 2,5 mesurée dans le métacrésol à 25°C pour une concentration initiale de 0,8 g/100 ml.

On peut citer par exemple la composition comprenant, en poids :

a) de 1 à 99 %, de préférence 5 à 95 %, d'un premier polyamide caractérisé par les enchaînements

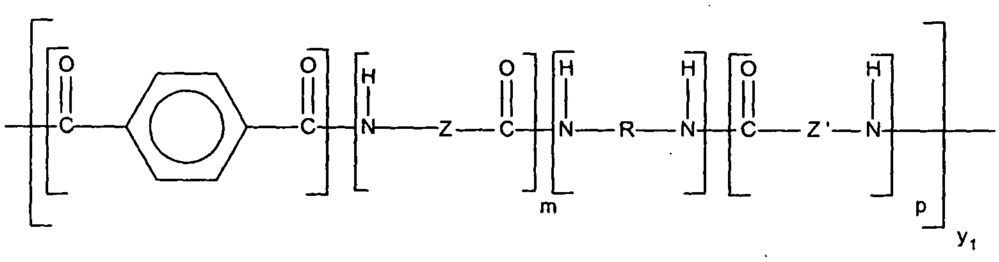

et

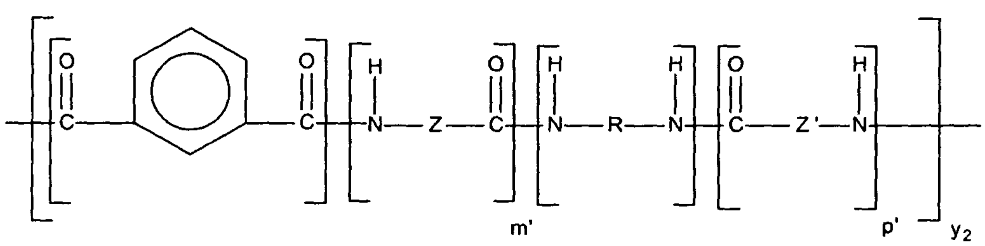

dans lesquels

$y_1$ et $y_2$ sont des nombres tels que leur somme $y_1 + y_2$ est comprise entre 10 et 200 et que $y_1/y_1 + y_2 = 0,5$ ;

m, p, m', p' sont des nombres égaux ou supéréurs à 0 ;

Z et Z' dans les motifs aliphatiques - NH-Z-CO- et - NH-Z'-CO-, identiques ou différents sont soit un segment polyméthylène

$$-(CH_2)_n-$$

où n est un nombre entier égal ou supérieur à 6 et de préférence compris entre 7 et 11, soit une

séquence contenant une fonction amide résultant de la condensation sensiblement stoechiométrique d'une ou plusieurs diamine(s) aliphatique (s) contenant au moins 4 atomes de carbone entre les fonctions amines et d'un ou plusieurs diacide(s) carboxylique(s) aliphatique(s) contenant au moins 4, et de préférence au moins 6, atomes de carbone entre les fonctions acides ;

-HN-R-NH- est une diamine cycloaliphatique et/ou aliphatique et/ou arylaliphatique ;

le diacide aromatique pouvant être remplacé jusqu'à 30 % en mole par un diacide carboxylique aliphatique contenant plus de 4, de préférence 6, atomes de carbone entre les fonctions acides ; et

b) 99 à 1 %, de préférence 95 à 5 %, d'un polyamide semi-cristallin comprenant au moins 35 %, de préférence 50 %, en poids d'un motif aliphatique défini par la séquence $-NH-(CH_2)_{n'}-CO-$ où n' est un nombre entier égal ou supérieur à 6 et de préférence compris entre 7 et 11, éventuellement en tant que partie d'un motif semi-aromatique, et/ou d'un motif aliphatique défini par la séquence contenant une fonction amide résultant de la condensation sensiblement stoechiométrique d'une ou plusieurs diamine(s) aliphatique(s) contenant au moins 4 atomes de carbone entre les fonctions amines et d'un ou plusieurs diacide(s) carboxylique(s) aliphatique(s) contenant au moins 4, et de préférence au moins 6, atomes de carbone entre les fonctions acides, susceptible d'être obtenue selon un procédé comprenant une étape de mélange desdits premier polyamide et polyamide semi-cristallin à une température supérieure à 300°C, de préférence entre 300° et 400°C. Le polyamide semi-cristallin est de préférence choisi parmi les polyamides aliphatiques cités plus haut et est avantageusement du PA 11 ou du PA 12.

Avantageusement cette composition comprend en poids :

40 à 90 % dudit premier polyamide; et
60 à 10 % dudit polyamide semi-cristallin.

De préféreoe la composition comprend en poids:

50 à 80 % dudit premier polyamide; et
50 à 20% dudit polyamide semi-cristallin.

On peut encore citer la composition polyamide comprenant un polyamide semi-cristallin et une quantité suffisante de polyamide amorphe présentant une température de transition vitreuse et ne présentant pas de changement de phase pour la rendre transparente et traitable à chaud sans déformation, susceptible d'être obtenue par le mélange de ses constituants à une température supérieure ou égale à 300°C et d'une transformation à une température supérieure ou égale à 300°C, la transparence étant telle que le coefficient de transmission lumineuse est supérieur ou égal à 50%, mesuré à 700 nm et pour une épaisseur de 2 mm.

Avantageusement cette composition comprend, en poids:

65 à 80 % dudit polyamide semi-cristallin; et
35 à 20 % dudit polyamide amorphe.

De préférence cette composition comprend, en poids:

68 à 77 % dudit polyamide semi-cristallin; et
32 à 23 % dudit polyamide amorphe.

Le polyamide semi-cristallin est de préférence choisi parmi les polyamides aliphatiques cités plus haut et est avantageusement du PA 11 ou du PA 12.

On peut encore citer la composition transparente comprenant en poids, le total étant 100%:

- 5 à 40% d'un polyamide amorphe (B) qui résulte essentiellement de la condensation:
  - ➢ soit d'au moins une diamine choisie parmi les diamines cycloaliphatiques et les diamines aliphatiques et d'au moins un diacide choisi, parmi les diacides cycloaliphatiques et les diacides aliphatiques, l'un au moins de ces motifs diamines ou diacides étant cycloaliphatique,
  - ➢ soit d'un acide alpha omega amino carboxylique cycloaliphatique,
  - ➢ soit d'une combinaison de ces deux possibilités,
  - ➢ et éventuellement d'au moins un monomère choisi parmi les acides alpha omega amino carboxyliques ou les éventuels lactames correspondants, les diacides aliphatiques et les diamines aliphatiques,

- 0 à 40% d'un polyamide souple (C) choisi parmi les copolymères à blocs polyamides et blocs polyether et les copolyamides,
- 0 à 20% d'un compatibilisant (D) de (A) et (B),
- 0 à 40% d'un modifiant souple (M),
- avec la condition que (C)+(D)+(M) est compris entre 0 et 50%,
- le complément à 100% d'un polyamide (A) semi cristallin.

Le polyamide semi-cristallin est de préférence choisi parmi les polyamides aliphatiques cités plus haut et est avantageusement du PA 11 ou du PA 12.
On peut encore citer la composition transparente comprenant en poids, le total étant 100%:

- 5 à 40% d'un polyamide amorphe (B) qui résulte essentiellement de la condensation d'au moins une diamine éventuellement cycloaliphatique, d'au moins un diacide aromatique et éventuellement d'au moins un monomère choisi parmi :

  les acides alpha omega amino carboxyliques,
  les diacides aliphatiques,
  les diamines aliphatiques,

- 0 à 40% d'un polyamide souple (C) choisi parmi les copolymères à blocs polyamides et blocs polyether et les copolyamides,
- 0 à 20% d'un compatibilisant (D) de (A) et (B),
- (C)+(D) est compris entre 2 et 50%
- avec la condition que (B)+(C)+(D) n'est pas inférieur à 30%,
- le complément à 100% d'un polyamide (A) semi cristallin.

Le polyamide semi-cristallin est de préférence choisi parmi les polyamides aliphatiques cités plus haut et est avantageusement du PA 11 ou duPA12.
Dans ces deux dernières compositions les termes "transparent", "polyamide", "semi-cristallin" et "amorphe" ont les définitions suivantes :
Le terme "transparent" correspond à un coefficient de transmission lumineuse supérieur ou égal à 50 %, mesuré à 560 nm et pour une épaisseur de 2 mm. Préférentiellement il est >= 80%.
Le terme "polyamide" employé dans la présente description couvre aussi les copolyamides, pouvant contenir des tiers monomères en une proportion n'affectant pas les qualités essentielles des polyamides.
Le terme "semi-cristallin" couvre les (co)polyamides présentant à la fois une température de transition vitreuse Tg et une température de fusion Tf.
Le terme "amorphe" couvre des polyamides qui passent à l'état liquide ou fondu donc qui peuvent se mettre en oeuvre, au-dessus de leur Tg. Ces polymères n'ont a priori pas de Tf en DSC. Toutefois ils peuvent en avoir une mais son intensité est alors négligeable et n'affecte pas le caractère essentiellement amorphe du polymère.
On peut encore citer les mélanges de PA 11 ou PA 12 contenant 10 à 40%, avantageusement 15 à 35% et de préférence 20 à 35% en poids de polyamide semi aromatique ou semi cycloaliphatique.
**S'agissant de la couche intermédiaire,** elle est en matériau polymère bien souple. Cette couche doit bien sûr aussi être adhérente aux couches inférieure et supérieure afin d'obtenir un objet cohésif.
Avantageusement (mais pas obligatoirement) cette couche est choisie :

  la plus transparente possible,
  avec une HDT pas trop faible pour ne pas faire fluer la feuille lors des opérations à chaud de fabrication du ski,
  avec une bonne tenue UV (une alternative consiste à rajouter de l'absorbeur UV dans la couche supérieure, ce qui protège ainsi la couche intermédiaire des UV).

A titre d'exemple de cette couche intermédiaire on peut citer les produits utiles comme liants tels que les liants de coextrusion.
Avantageusement le liant est une polyoléfine fonctionnalisée portant une fonction acide carboxylique ou anhydride d'acide carboxylique. Elle peut être mélangée avec une polyoléfine non fonctionnalisée.
Pour simplifier on a décrit ci dessous des polyoléfines fonctionnalisées (B1) et des polyoléfines non fonctionnalisées (B2).
Une polyoléfine non fonctionnalisée (B2) est classiquement un homo polymère ou copolymère d'alpha oléfines ou de dioléfines, telles que par exemple, éthylène, propylène, butène-1, octène-1, butadiène. A titre d'exemple, on

peut citer :

- les homo polymères et copolymères du polyéthylène, en particulier LDPE, HDPE, LLDPE(linear low density polyéthylène, ou polyéthylène basse densité lineaire), VLDPE(very low density polyéthylène, ou polyéthylène très basse densité) et le polyéthylène métallocène .
- les homopolymères ou copolymères du propylène.
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle, la proportion de comonomère pouvant atteindre 40% en poids.

La polyoléfine fonctionnalisée (B1) peut être un polymère d'alpha oléfines ayant des motifs réactifs (les fonctionnalités) ; de tels motifs réactifs sont les fonctions acides ou anhydrides. À titre d'exemple, on peut citer les polyoléfines précédentes (B2) greffées ou co- ou ter polymérisées par des acides carboxyliques ou les sels ou esters correspondants tels que l'acide (méth)acrylique ou encore par des anhydrides d'acides carboxyliques tels que l'anhydride maléique. Une polyoléfine fonctionnalisée est par exemple un mélange PE/EPR, dont le ratio en poids peut varier dans de larges mesures, par exemple entre 40/60 et 90/10, ledit mélange étant co-greffé avec un anhydride, notamment anhydride maléique, selon un taux de greffage par exemple de 0,01 à 5% en poids.

La polyoléfine fonctionnalisée (B1) peut être choisie parmi les (co)polymères suivants, greffés avec anhydride maléique, dans lesquels le taux de greffage est par exemple de 0,01 à 5% en poids :

- du PE, du PP, des copolymères de l'éthylène avec propylène, butène, hexène, ou octène contenant par exemple de 35 à 80% en poids d'éthylène ;
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- des copolymères éthylène et acétate de vinyle (EVA), contenant jusqu'à 40% en poids d'acétate de vinyle ;
- des copolymères éthylène et (méth)acrylate d'alkyle, contenant jusqu'à 40% en poids de (méth)acrylate d'alkyle ;
- des copolymères éthylène et acétate de vinyle (EVA) et (méth)acrylate d'alkyle, contenant jusqu'à 40% en poids de comonomères .

La polyoléfine fonctionnalisée (B1) peut aussi être un co- ou ter polymère d'au moins les motifs suivants : (1) éthylène, (2) (méth)acrylate d'alkyle ou ester vinylique d'acide carboxylique saturé et (3) anhydride tel que anhydride maléique ou acide (méth)acrylique.
A titre d'exemple de polyoléfines fonctionnalisées de ce dernier type, on peut citer les copolymères suivants, où l'éthylène représente de préférence au moins 60% en poids et où le ter monomère (la fonction) représente par exemple de 0,1 à 10% en poids du copolymère :

- les copolymères éthylène/(méth)acrylate d'alkyle / acide (méth)acrylique ou anhydride maléique;
- les copolymères éthylène/acétate de vinyle/anhydride maléique;
- les copolymères éthylène/acétate de vinyle ou (méth)acrylate d'alkyle / acide (méth)acrylique ou anhydride maléique.

Le terme "(méth)acrylate d'alkyle" dans (B1) ou (B2) désigne les méthacrylates et les acrylates d'alkyle en C1 à C12, et peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.
Les copolymères mentionnés ci-dessus, (B1) et (B2), peuvent être copolymérisés de façon statistique ou séquencée et présenter une structure linéaire ou ramifiée.
Le poids moléculaire, l'indice MFI, la densité de ces polyoléfines peuvent aussi varier dans un large mesure, ce que l'homme de fart appréciera. MFI, abréviation de Melt Flow Index, est l'indice de fluidité à l'état fondu. On le mesure selon la norme ASTM 1238.
Avantageusement les polyoléfines (B2) non fonctionnalisées sont choisies parmi les homopolymères ou copolymères du polypropylène et tout homo polymère de l'éthylène ou copolymère de l'éthylène et d'un comonomère de type alpha oléfinique tel que le propylène, le butène, l'hexène, l'octène ou le 4-méthyl 1-Pentène. On peut citer par

exemple les PP, les PE de haute densité, PE de moyenne densité, PE basse densité linéaire, PE basse densité, PE de très basse densité. Ces polyéthylènes sont connus par l'Homme de l'Art comme étant produits selon un procédé « radicalaire », selon une catalyse de type « Ziegler » ou, plus récemment, selon une catalyse dite « métallocène ».

Avantageusement les polyoléfines fonctionnalisées (B1) sont choisies parmi tout polymère comprenant des motifs alpha oléfiniques et des motifs porteurs de fonctions réactives polaires comme les fonctions acide carboxylique ou anhydride d'acide carboxylique. A titre d'exemples de tels polymères, on peut citer les ter polymères de l'éthylène, d'acrylate d'alkyle et d'anhydride maléique comme les Lotader®de la Demanderesse ou des polyoléfines greffées par de l'anhydride maléique comme les Orevac®de la Demanderesse ainsi que des ter polymères de l'éthylène, d'acrylate d'alkyle et d'acide (meth) acrylique.

A titre d'autre exemple de cette couche intermédiaire on peut citer les TPU (abréviation de thermoplastique polyuréthane). Ces TPU sont constitués de blocs polyethers souples qui sont des restes de polyetherdiols et de blocs rigides (polyuréthanes) qui résultent de la réaction d'au moins un diisocyanate avec au moins un diol court. Le diol court allongeur de chaîne peut être choisi dans le groupe constitué du neopentylglycol, du cyclohexanediméthanol et des glycols aliphatiques de formule $HO(CH_2)_nOH$ dans laquelle n est un entier valant de 2 à 10. Les blocs polyuréthanes et les blocs polyéthers sont reliés par des liaisons résultant de la réaction des fonctions isocyanates avec les fonctions OH du polyétherdiol.

On peut encore citer les polyesteruréthannes par exemple ceux comprenant des motifs diisocyanates, des motifs dérivés de polyesters diols amorphes et des motifs dérivés d'un diol court allongeur de chaîne. Ils peuvent contenir des plastifiants.

Le TPU peut être en mélange avec des copolymères à blocs polyamides et blocs polyéthers et/ou des résines vinyle aromatique. S'agissant de la résine vinyle aromatique, par monomère vinylaromatique au sens de la présente invention, on entend un monomère aromatique à insaturation éthylénique tel que le styrène, le vinyltoluène, l'alpha-méthylstyrène, le méthyl-4-styrène, le méthyl-3-styrène, le méthoxy-4-styrène, l'hydroxyméthyl-2-styrène, l'éthyl-4-styrène, l'éthoxy-4-styrène, le diméthyl-3,4-styrène, le chloro-2-styrène, le chloro-3-styrène, le chloro-4-méthyl-3-styrène, le tert.-butyl-3-styrène, le dichloro-2,4-styrène, le dichloro-2,6-styrène et le vinyl-1-naphtalène. La résine vinyle aromatique est avantageusement un polymère styrènique.

A titre d'exemple de polymère styrènique on peut citer le polystyrène, le polystyrène modifié par des élastomères, les copolymères du styrène et de l'acrylonitrile (SAN), le SAN modifié par des élastomères, l'ABS qu'on obtient par exemple par greffage (graft-polymérisation) de styrène et d'acrylonitrile sur un tronc de polybutadiène ou de copolymère butadiène-acrylonitrile, les mélanges de SAN et d'ABS, l'ABS modifié par des élastomères, le SAN modifié par des élastomères et les mélanges de SAN et d'ABS modifiés par des élastomères. Les élastomères mentionnés ci dessus peuvent être par exemple l'EPR (abréviation d'éthylène-propylène-rubber ou élastomère éthylène-propylene), l'EPDM (abréviation d'éthylène-propylene-diène rubber ou élastomère éthylène-propylene-diène), le polybutadiène, le copolymère acrylonitrile-butadiène, le polyisoprène, le copolymère isoprène-acrylonitrile. Ces élastomères sont utiles pour améliorer le choc à froid.

Le polystyrène choc peut être obtenu (i) soit par mélange de polystyrène avec des élastomères tels que le polybutadiène, des copolymères du butadiène et de l'acrylonitrile, du polyisoprène ou des copolymères de l'isoprène et de l'acrylonitrile (ii) soit plus habituellement par greffage de styrène (graft-polymérisation) sur un tronc de polybutadiène ou de copolymère butadiène-acrylonitrile.

Dans les polymères styrèniques qu'on vient de citer une partie du styrène peut être remplacée par des monomères insaturés copolymèrisables avec le styrène, à titre d'exemple on peut citer l'alpha-methylstyrène et les esters (meth)acryliques. Comme exemples des copolymères du styrène, on peut encore citer le chloropolystyrène, le poly-alpha-méthylstyrène, les copolymères styrène-chlorostyrène, les copolymères styrène-propylène, les copolymères styrène-butadiène, les copolymères styrène-isoprène, les copolymères styrène-chlorure de vinyle, les copolymères styrène-acétate de vinyle, les copolymères styrène-acrylate d'alkyle (acrylate de méthyle, d'éthyle, de butyle, d'octyle, de phényle), les copolymères styrène - méthacrylate d'alkyle (méthacrylate de méthyle, d'éthyle, de butyle, de phényle), les copolymères styrène - -chloroacrylate de méthyle et les copolymères styrène - acrylonitrile - acrylate d'alkyle. Dans ces copolymères, la teneur en comonomères va généralement jusqu'à 20% en poids. La présente invention concerne aussi des polystyrènes metallocènes à haut point de fusion. Avantageusement la résine vinyle aromatique est l'ABS et les mélanges de SAN et d'ABS.

La proportion de TPU dans la couche de TPU peut être quelconque pourvu qu'elle soit supérieure à 1% en poids et avantageusement d'au moins 20%.

On peut encore citer les mélanges de polyamide 11 ou 12 contenant en poids 10 à 40% de polyoléfine éventuellement fonctionnalisée ou d'un mélange de polyoléfine et de polyoléfine fonctionnalisée.

On peut encore citer les mélanges (i) de polyoléfine ou de polyoléfine et de polyoléfine fonctionnalisée et contenant (ii) 10 à 40% de polyamide 11 ou 12.

**S'agissant de la couche de polyamide 2** elle est de préférence en PA 12, en PA 11, en mélange de PA 12 et d'un copolymère à blocs polyamides et blocs polyéthers ou en mélange de PA 12, de PA 11 et éventuellement d'un

copolymère éthylène-acrylate d'alkyle-anhydride maleique.

Les épaisseurs des couches peuvent être 150 à 300 (polyamide 1) / 100 à 400 / 50 à 200 μm. Les épaisseurs des couches sont avantageusement 200 (polyamide 1) / 300 / 100 μm. On peut bien évidement faire varier ces épaisseurs pour ajuster le compromis de propriétés (en particulier la souplesse en fonction de la transparence, la souplesse en fonction de la tenue au fluage). On peut par exemple augmenter l'épaisseur de la couche centrale pour augmenter la souplesse, ou faire l'inverse pour augmenter la tenue fluage et la transparence.

Les couches peuvent contenir les additifs habituels: stabilisant, colorants, plastifiant, lubrifiant, nucléant, modifiant choc, assouplissant, etc...

Les structures de l'invention peuvent être fabriquées par coextrusion. Le procédé de coextrusion a plat peut être du calendrage ou du cast ou autre. On peut aussi extruder une couche (ou 2 couches) puis déposer les autres couches par couchage ou enduction. La couche intermédiaire et/ou la couche de polyamide 2 peuvent être sous forme de tissé ou de non tissé.

***Exemples***

Tableau 1

| Ex | polyamide 1 | couche interm. | polyamide 2 | Tenue rayure | Tenue Choc | Souplesse | Subli. | Transparence | Sérig. | Tenue UV | Tenue fluage |
|---|---|---|---|---|---|---|---|---|---|---|---|
| 1 | BESN0 24 TLCC | PP + PPg | AESN0 14 | +++ | +++ | ++ | ++ | +++ | ++ | +++ | +++ |
| 2 | PA 11+25% IPDA,12 | " | " | +++ | +++ | ++ | ++ | +++ | ++ | +++ | +++ |
| 3 | PA 11 + 10% IPDA,12 | " | " | +++ | +++ | ++ | ++ | +++ | ++ | ++ | |
| 4 | MB3751 | " | " | +++ | +++ | ++ | ++ | +++ | ++ | ++ | |
| 5 | PA12 | " | " | ++ | ++ | ++ | ++ | + | ++ | ++ | |
| 6 | PA12 + 15%PA-10.12 | " | " | ++ | ++ | ++ | ++ | + | ++ | ++ | |
| 7 | BESN0 TL NB + BESN0 24 TLCC | " | " | +++ | +++ | ++ | ++ | ++ | ++ | +++ | |
| 8 | CX7323 | " | " | +++ | ++ | + | ++ | +++ | ++ | | |
| 9 | PA-PACM.12 | " | " | +++ | ++ | + | ++ | +++ | ++ | | |
| 10 | TR90LX | " | " | +++ | ++ | + | ++ | +++ | ++ | | |
| 11 | TR90UV | " | " | +++ | + | + | ++ | +++ | ++ | | |
| 12 | PA-BMACM.12 | " | " | +++ | + | + | ++ | +++ | ++ | | |
| 13 | BESN0 TL NB + BESN0 24 TLCC | " | EX9200 | +++ | +++ | | ++ | ++ | + | +++ | |
| 14 | PA12 + 15%PA-10.12 | " | " | ++ | ++ | ++ | ++ | + | + | ++ | |
| 15 | " | " | PA12 + 15-40% PEBA40 | +++ | +++ | | ++ | ++ | + | +++ | |
| 16 | " | " | PEBA40 + 15%-40% PA12 | +++ | +++ | | + | ++ | +++ | +++ | |

NB : les mélanges sont préférentiellement fabriqués lors d'une étape antérieure de compoundage mais peuvent aussi être réalisés en même temps que l'étape de mise en oeuvre

Tableau 1(suite)

| ex | polyamide 1 | couche interm. | polyamide 2 | Tenue rayure | Tenue Choc | Souplesse | Subli. | Transparence | Sérig. | Tenue UV | Tenue fluage |
|---|---|---|---|---|---|---|---|---|---|---|---|
| 17 | BESN0 24 TLCC | PP+PPg | PA 11+25%IPDA,12 +6% Lotader AX 8840 | +++ | +++ | | ++ | +++ | +++ | +++ | |
| 18 | " | " | PA11 | +++ | +++ | | ++ | ++ | - | +++ | |
| 19 | PA 11+25% IPDA,12 | PPg | AESN0 14 | +++ | ++ | ++ | ++ | ++ | ++ | +++ | +++ |
| 20 | " | coPP + coPPg | " | +++ | +++ | ++ | ++ | +++ | ++ | +++ | +++ |
| 21 | " | HDPE + HDPEg | " | +++ | +++ | ++ | ++ | ++ | ++ | +++ | ++ |
| 22 | " | L3210 | " | +++ | +++ | +++ | ++ | ++ | ++ | +++ | ++ |
| 23 | " | L3410 | " | +++ | +++ | +++ | ++ | +++ | ++ | +++ | + |
| 24 | " | Or.9314 | " | +++ | +++ | +++ | ++ | +++ | ++ | +++ | + |
| 25 | " | TPU | " | +++ | +++ | +++ | ++ | +++ | ++ | + | +++ |
| 26 | " | PEBA63 | " | +++ | +++ | ++ | ++ | ++ | ++ | ++ | +++ |
| 27 | " | PEBA40 | " | +++ | +++ | +++ | ++ | +++ | ++ | ++ | ++ |
| 28 | BESN0 24 TLCC | Orevac 18729 | " | +++ | +++ | ++ | ++ | +++ | ++ | +++ | +++ |
| 29 | " | Orevac 18760 | " | +++ | +++ | ++ | ++ | +++ | ++ | +++ | +++ |
| 30 | " | Orevac 18729 | PA12 + 12% PA11 + 6%L3410 | +++ | +++ | ++ | ++ | +++ | ++ | +++ | +++ |
| 31 | " | Orevac 18729 | PA 12+25%IPDA,12 +12% PA11+6% Lot 3210 | +++ | +++ | ++ | ++ | +++ | ++ | +++ | +++ |
| 32 | " | BESN0 24 TLCC + 9%L3210 + 27%Ly7BA01 | PA12 + 12% PA11 + 6%L3410 | +++ | +++ | + | ++ | +++ | ++ | +++ | +++ |
| 33 | " | L3210 + 36% BESN0 24 TLCC | PA12 + 12% PA11 + 6%L3410 | +++ | +++ | ++ | ++ | ++ | ++ | +++ | ++ à +++ |
| 34 | " | lldPE d911 + 16% lldPEg + 36% BESN0 24 TLCC | PA12 + 12% PA11 + 6%L3410 | +++ | +++ | +++ | ++ | +++ | ++ | +++ | ++ à +++ |
| 35 | " | lldPE d911 + 16% L3210 | PA12 + 12% PA11 + 6%L3410 | +++ | +++ | +++ | ++ | ++ | ++ | +++ | ++ |

Références des produits et définitions

| | |
|---|---|
| BESN0 24 TLCC | Polyamide 11 Atofina Rilsan BESN0 24 TL CC |
| IPDA, 12 | polyamide amorphe : IPDA,12 produit de condensation de l'isophorone diamine et de l'acide en C 12. |
| AESN0 14 | Polyamide 12 Atofina Rilsan AESN0 14 TL |
| MB3751 | Atofina Rilsan MB3751 mélange de PA 11 et 25% en poids de polyamide semiaromatique |
| PA12 | polyamide-12 (MFI 235°C & 5kg compris entre 0.5 et 30) |
| PA11 | polyamide-11 (MFI 235°C & 5kg compris entre 0.5 et 30) |
| PA-10.12 | polyamide-10.12 |
| BESN0 TL NB | PA 11 Atofina Rilsan BESN0 TL NB |
| CX7323 | Vestamid CX7323 polyamide vendu par Degussa et décrit dans EP619336 |
| PA-PACM.12 | polyamide-PACM.12 |
| TR90LX | Ems Grilamid TR90LX polyamide vendu par EMS |
| TR90UV | Ems Grilamid TR90UV polyamide vendu par EMS |
| PA-BMACM.12 | polyamide-BMACM.12, aussi appelé polyamide-MACM.12 |
| EX9200 | Degussa Vestamid EX9200 polyamide vendu par Degussa. |
| PEBA40 | Atofina PEBAX 1205 copolymère à blocs PA 12 et blocs PTMG en proportions 50/50 |
| PEBA63 | Atofina PEBAX 6333 copolymère à blocs PA 12 et blocs PTMG en proportions 80/20 |
| PP | polypropylene Atofina PPC 3640 |
| PPg | Atofina Orevac CA100, PP greffé à 1% d'anhydride maléique |
| Ly7BA01 | Atofina Lotryl 7BA01 (copolymère éthylène acrylate de butyle à 7% en poids d'acrylate et de MFI 1 à 190°C sous 2,16 kg |
| lldPEg | lldPE greffé anhydride maléique de marque Dupont Fusabond MB528D |
| lldPE d911 | lldPE de densité 911, de MFI 190°C sous 2.16kg = 3 : de nom Clearflex CLBO, fabriqué par Polimeri Europa |

Références des produits et définitions

| | |
|---|---|
| coPP | polypropylène Atofina PPC 3640 |
| coPPg | Atofina PPC 3640 greffé à 1% anhydride maléïque |
| HDPE | Atofina Laqtène 2008SN60U polyethylene haute densité |
| HDPEg | DuPont Fusabond MB100D polyethylene haute densité greffé maleique |
| L3210 | Atofina Lotader 3210 copolymère ethylene-acrylate de butyle-anhydride maleique de MFI= 5 à 6% d'acrylate et 3% de MAH. |
| L3410 | Atofina Lotader 3410 copolymère ethylene-acrylate de butyle-anhydride maleique de MFI= 5 à 18% d'acrylate et 3% de MAH. |
| Or.9314 | Atofina Orevac 9314 terpolymère ethylene-acetate de vinyle-anhydride maleique |
| TPU | Elastoran Elastollan 1185A |
| orevac 18729 | PP greffé maleique vendu par ATOFINA |
| orevac 18760 | PP greffé maleique vendu par ATOFINA |
| Lot AX8840 | copolymère ethylène- méthacrylate de glycidyle de proportions en poids 92 / 8 de MFI à 190°C sous 2,16 kg compris entre 4 et 6. |

Definitions du tableau 1

| | |
|---|---|
| Tenue rayure | aptitude à résister à la rayure et à conserver un aspect brillant |
| Tenue choc | aptitude à résister à un choc, un coup de carre, une forte vibration, en particulier à basse température |
| Souplesse | souplesse de la feuille |
| Subli. | aptitude à se décorer aisément par sublimation (bon transfert des pigments, décor bien net) |
| Sérig. | aptitude à bien coller avec les encres de sérigraphie |
| Tenue UV | aptitude à résister au rayonnement UV |
| Tenue fluage | aptitude à supporter les diverses opérations à chaud lors de la fabrication d'un ski, cela sans déformation rédibitoire de la feuille |

Les polymères sont choisis parmi ceux apte à l'extrusion de feuille, c'est à dire typiquement des polymère assez visqueux, donc de masse assez élevée

Dans le cas d'une décoration par sublimation, la face sublimée est typiquement préalablement flammée, afin que par la suite l'adhésion sur le substrat ski soit meilleure.

Les épaisseurs des couches sont 200 / 300 / 100 µm.

On peut bien évidement faire varier ces épaisseurS pour ajuster le compromis de proprietés.

On peut par exemple augmenter l'épaisseur de la couche centrale pour augmenter la souplesse, ou faire l'inverse pour augmenter la tenue fluage et la transparence.

**Revendications**

1. Structure multicouche transparente polyamide 1/ couche intermédiaire / polyamide 2.

2. Structure selon la revendication 1 dans laquelle la couche de polyamide 1 comprend au moins un polyamide choisi parmi les PA semi-aromatiques ou semi-cycloaliphatiques et les polyamides aliphatiques.

3. Structure selon la revendication 2 dans laquelle les polyamides aliphatiques peuvent être choisis parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12.

4. Structure selon l'une quelconque des revendications précédentes dans laquelle la couche de polyamide 1 peut comprendre aussi des copolymères à blocs polyamides et blocs polyéthers.

5. Structure selon l'une quelconque des revendications précédentes dans laquelle la couche intermédiaire est un liant de coextrusion.

6. Structure selon l'une quelconque des revendications 1 à 4 dans laquelle la couche intermédiaire est en TPU.

7. Article décoré constitué d'un objet sur lequel on a collé la structure de l'une quelconque des revendications précédentes, la couche de polyamide 1 étant à l'extérieur.

8. Article selon la revendication 7 décoré par sublimation d'encres dans la couche de polyamide 1.

9. Structure constituée soit par le collage de la structure polyamide 1/ couche intermédiaire / polyamide 2 sur une mousse ou une résine soit par le surmoulage de la mousse ou la résine sur la structure polyamide 1/ couche intermédiaire / polyamide 2 disposée dans un moule, la couche de polyamide 1 étant du coté de la paroi du moule.

10. Article selon la revendication 7 ou 8 qui est un ski.